# EUROPÄISCHE PATENTSCHRIFT

(11) **EP 1 361 386 B1**
(45) Veröffentlichungstag und Bekanntmachung des Hinweises auf die Patenterteilung: **19.01.2005**
(21) Anmeldenummer: 03090090.6
(22) Anmeldetag: 01.04.2003
(51) Int. Cl.: F16L 13/14

(54) **Rohrpressverbindung**
Press fitted pipe joint
Tuyaux emmanché en ajustage serré à la presse

(30) Priorität: 10.05.2002 DE 10221829
(43) Veröffentlichungstag der Anmeldung: 12.11.2003
(73) Patentinhaber: Geberit Mapress GmbH, 40764 Langenfeld (DE)
(72) Erfinder: Simon, Udo, 45479 Mülheim (DE); Sedlak, Bernd, 45478 Mülheim (DE)
(74) Vertreter: Meissner, Peter E., Dipl.-Ing.

(56) Entgegenhaltungen:
- WO-A-01/63160
- DE-A- 10 044 675
- DE-C- 19 722 935

## Beschreibung

Die Erfindung betrifft einen Pressfitting zur Herstellung einer unlösbaren dichten Verbindung von glattendigen Rohren gemäß dem Oberbegriff des Patentanspruches 1.

Die Dichtfunktion der bekannten Verbindung (siehe Prospekt der Mannesmann Pressfitting GmbH, Ausgabe 8/1994) wird dadurch erreicht, dass durch plastische Verformung des wulstartig ausgebildeten Endes des Pressfittings der Dichtring elastisch verformt wird und über einen bestimmten Teil des Querschnittsumfanges linienförmig an den ihn umgebenden Oberflächenbereichen des wulstartig ausgebildeten Endes des Pressfittings und des Rohres zur Anlage kommt. Zur Aufnahme der bei entsprechendem Innendruck auftretenden Längskräfte wird der dem wulstartig ausgebildeten Ende benachbarte zylindrische Bereich des Pressfittings zusammen mit dem eingeschobenen Rohr plastisch verformt. Bei der Verpressung werden sowohl das wulstförmig ausgebildete Ende als auch der benachbarte zylindrische Bereich mittels der Betätigungsvorrichtung gleichzeitig verformt.

Im Regelfall führt bei der nach der Installation vorgeschriebenen Druckprobe eine nichtverpresste Verbindungsstelle zu einer feststellbaren Leckage. In Sonderfällen kann es aber vorkommen, dass die Toleranzpaarung von Rohr und Pressfitting so ungünstig ist, dass der Dichtring schon beim Einschieben des glattendigen Rohres eine, wenn auch nur geringe Vorverformung erfährt, die aber ausreicht, um der Druckprobe bei der Abnahme der Installation standzuhalten.

Im späteren Betrieb atmet die Leitung aber, d. h. schnell schaltende Ventile führen zu Druckstößen. Es kann je nach Erwärmung zu Relativbewegungen kommen, so dass bei fehlender axialer Sicherung infolge der Nichtverpressung die sich zuvor ergebende geringe Vorverformung des Dichtringes nicht ausreicht, um die Dichtheit der Verbindungsstelle weiterhin zu gewährleisten.

Zur Lösung dieses Problems ist bereits vorgeschlagen worden, eine gewollte Leckagestelle im Dichtring zu bilden, die erst bei ordnungsgemäßer Verpressung der Verbindungsstelle dauerhaft geschlossen wird wie in der gattungsbildenden DE 19722935 C1, oder in DE 29813935 U1. Einen anderen Weg ist die Firma Viega gegangen. Sie hat die gewollte Leckagestelle in den Wulstbereich des Pressfittings gelegt (siehe Firmenprospekt, Viega November 2000).

Nachteilig bei allen bekannten Lösungen ist, dass eine bislang nicht beachtete Abdichtungsmöglichkeit damit nicht erfassbar ist. Genaue Untersuchungen haben ergeben, dass beim Abtrennen der Leitungsrohre mit einem üblichen Rohr-Rollschneider das Rohrende etwas einfällt. Wird ein auf diese Weise abgetrenntes Leitungsrohr in einen Pressfitting geschoben, kann es am inneren Anschlag im Pressfitting zu einem umlaufenden Kegelsitz kommen, durch das kein Medium hindurch treten kann. Somit wäre die Verbindungsstelle temporär auch ohne Verpressung dicht, daran würden weder der Konturdichtring noch die spezielle Kontur des Pressfittings der Firma Viega etwas ändern.

Aufgabe der Erfindung ist es deshalb, eine Rohrpressverbindung anzugeben, bei der der Konturdichtring bzw. die Viega-Kontur auch bei Bildung eines abdichtenden Kegelsitzes zwischen dem eingeschobenen Leitungsrohr und dem inneren Anschlag die Funktion der gewollten Leckage beibehält.

Diese Aufgabe wird ausgehend vom Oberbegriff in Verbindung mit den Merkmalen im kennzeichnenden Teil des Anspruchs 1 gelöst. Vorteilhafte Weiterbildungen sind jeweils Gegenstand von Unteransprüchen.

Nach der Lehre der Erfindung ist im Kontaktbereich zwischen dem inneren Anschlag des Pressfittings und dem Endbereich des eingeschobenen Leitungsrohres eine, das Eindringen des zu fördernden Mediums in den Ringspalt zwischen Leitungsrohr und Pressfitting erlaubende und die durchgehende kegelsitzartige Abdichtung unterbrechende Öffnung angeordnet. Dieser Lösungsvorschlag ist gekennzeichnet durch das Offenhalten einer Durchtrittsmöglichkeit für das zu fördernde Medium, so dass kein vollständig abdichtender Kegelsitz gebildet werden kann.

Bei einer ersten Ausführungsform wird die Öffnung gebildet durch eine Winkellage, der durch die ringförmige Kontur des inneren Anschlages aufgespannten Vertikalebene zur Längsachse des Pressfittings. Der Winkel muss so gewählt werden, dass dieser größer ist als eine mögliche Schiefstellung des Leitungsrohres im eingeschobenen Zustand.

Durch die Winkellage kommt der Stirnseitenbereich des eingeschobenen Leitungsrohres nur teilweise am inneren Umfang zur Anlage, da durch die Winkellage der übrige Umfangsbereich versetzt ist. Dieser Rückversatz ist ausreichend um eine durchgehende kegelsitzartige Abdichtung zu verhindern. Das Medium kann ungehindert vorbei strömen und wie gewollt eine Leckage anzeigen, falls die betreffende Verbindungsstelle nicht verpresst worden ist.

Bei einer zweiten Ausführungsform wird die Öffnung gebildet durch mindestens eine am Umfang des inneren Anschlages eingedrückte Sicke. Auch dadurch wird eine durchgehende kegelsitzartige Abdichtung verhindert.

Bei einer dritten Ausführungsform wird die Öffnung gebildet durch eine im Endbereich des eingeschobenen Leitungsrohres angeordnete schlitzartige Ausnehmung. Auch durch diese Ausnehmung wird die Bildung einer durchgehenden kegelsitzartigen Abdichtung verhindert.

Weitere Merkmale, Vorteile und Einzelheiten der Erfindung ergeben sich aus der nachfolgenden Beschreibung von einem in einer Zeichnung dargestellten Ausführungsbeispiel.

Es zeigen:
- **Figur 1**: in einem Längsschnitt die Bildung einer durchgehenden Abdichtung
- **Figur 2**: im Längsschnitt eine erste Ausführungsform der Erfindung
- **Figur 3**: wie Figur 2 aber mit eingeschobenem Leitungsrohr.
- **Figur 4**: in einem Längsschnitt eine zweite Ausführungsform der Erfindung
- **Figur 5**: eine Draufsicht von Figur 4
- **Figur 6**: einen Schnitt A - A in Figur 5
- **Figur 7**: in einem Längsschnitt eine dritte Ausführungsform der Erfindung
- **Figur 8**: eine Draufsicht auf den Endbereich des Leitungsrohres
- **Figur 9**: einen Schnitt A - A in Figur 8.

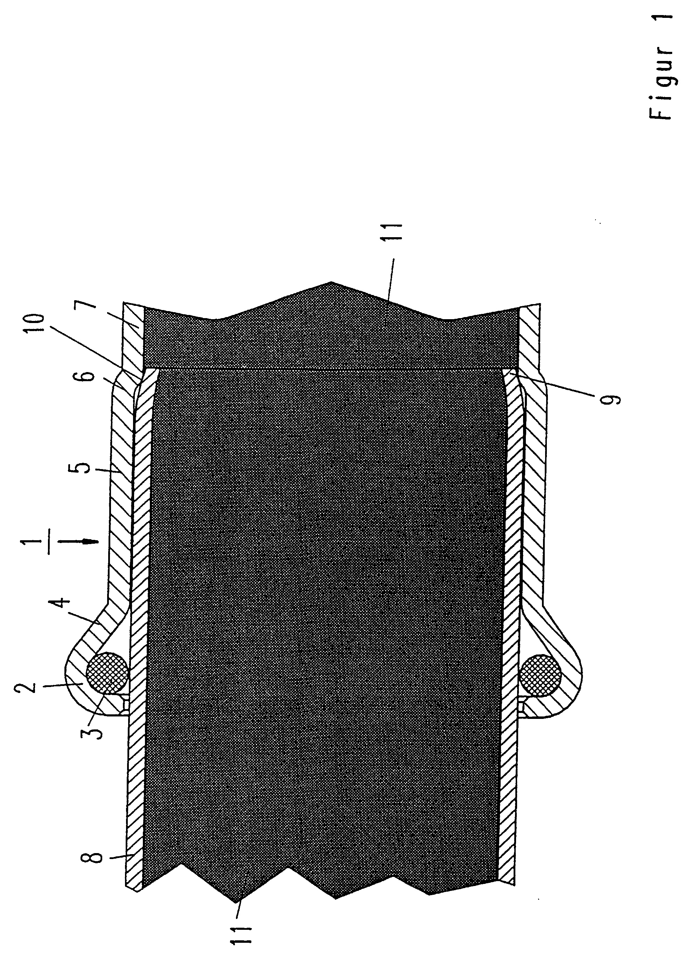

In **Figur 1** ist in einem Längsschnitt ein Teilbereich eines bekannten Pressfittings 1 dargestellt. Dieser weist am linksseitigen Endbereich eine ringförmige Wulst 2 mit einem darin eingelegten Dichtelement 3 auf. Auf der rechten Seite schließt sich an die ringförmige Wulst 2 über einen schrägen Abschnitt 4 ein zylindrisch ausgebildeter Abschnitt 5 an. Am Ende der Erstreckung dieses zylindrisch ausgebildeten Abschnittes 5 geht dieser mit einem Absatz 6 über in einen weiteren zylindrisch ausgebildeten Abschnitt 7, der einen kleineren Innendurchmesser aufweist als der vorhergehende. Dieser Absatz 6 bildet einen inneren Anschlag für das eingeschobene Leitungsrohr 8.

In diesem Ausführungsbeispiel ist das Leitungsrohr 8 mit einem üblichen Rohr-Rollschneider (hier nicht dargestellt) abgeschnitten worden. Wie bekannt, führt dies zu einem leichten Einfall des abgeschnittenen Endes 9. Wie in dieser Darstellung gut zu erkennen ist, kann dieser Endbereich 9 im Kontakt mit dem Absatz 6 zu einer durchgehenden kegelsitzartigen Abdichtung 10 führen. Das zu fördernde Medium 11 ist hier grau punktiert. Wie man sieht, kann das Medium 11 nicht durch die Abdichtung 10 hindurch treten.

Obwohl die Verbindungsstelle nicht verpresst ist, würde bei der üblichen Druckprobe diese Verbindungsstelle als dicht erscheinen. Dies gilt auch, selbst wenn das Dichtelement 3 entsprechend der DE 19722935 C1 als Konturdichtring ausgebildet wäre mit der Bildung einer gewollten Leckagestelle.

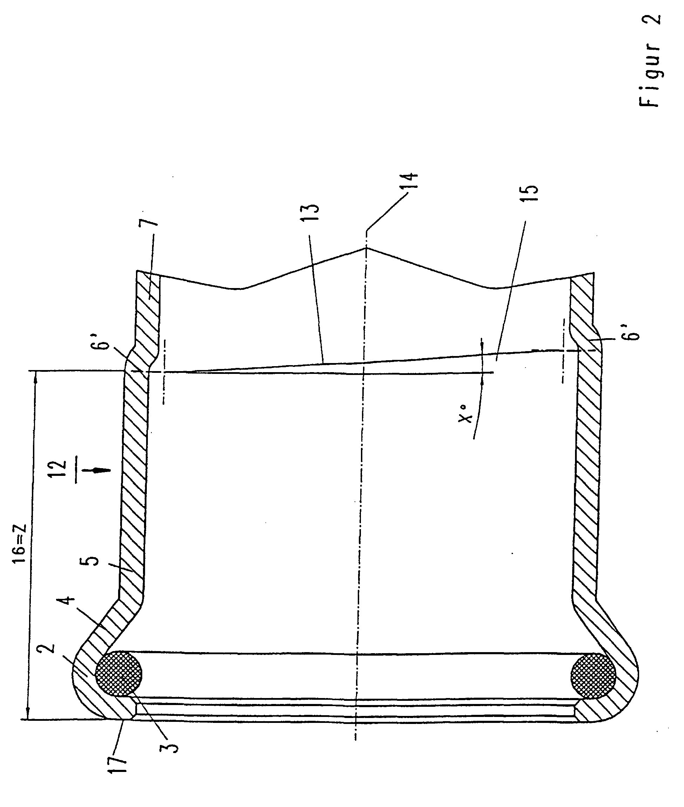

In **Figur 2** ist die Lösung des zuvor geschilderten Problems dargestellt. Der modifizierte Pressfitting 12 ist vergleichbar wie der in **Figur 1** dargestellte Pressfitting 1 aufgebaut, d. h. mit ringförmiger Wulst 2, mit schrägem Abschnitt 4 und mit einem zylindrisch ausgebildeten Abschnitt 5, unterschiedlich ist nur die Ausbildung des Absatzes 6'.

Die durch die ringförmige Kontur aufgespannte Vertikalebene 13 steht nicht mehr rechtwinklig auf der Längsachse 14 des Pressfittings 12, sondern weist eine Winkellage 15 auf. Die Winkellage 15 muss so gewählt werden, dass diese größer ist, als die mögliche Schiefstellung des Leitungsrohres im eingeschobenen Zustand. Um die Einbaumaße beizubehalten wird der kürzeste Abstand 16 zwischen dem Absatz 6' und der Stirnseite 17 des Pressfittings 12 so gewählt, dass er dem Z-Maß entspricht.

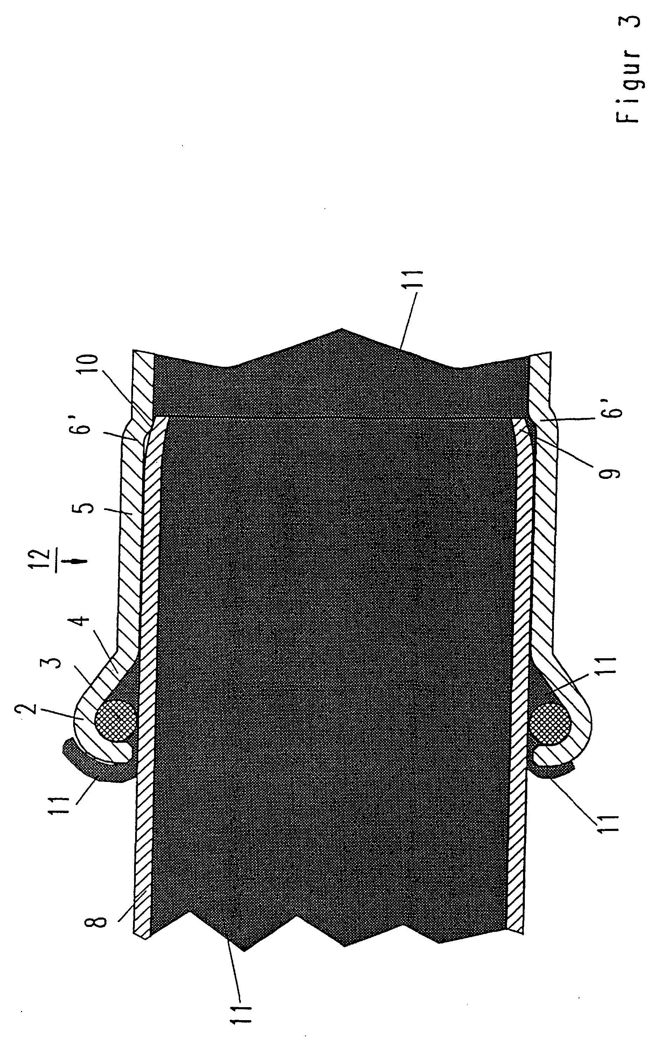

**Figur 3** zeigt die Wirkungsweise des neu vorgeschlagenen Pressfittings 12. Durch die in **Figur 2** dargestellte Winkellage kommt nur ein kleiner Teil des eingefallenen Endbereiches 9 am Absatz 6' zur Anlage. Der übrige Teilumfang weist einen kleinen Abstand zum Absatz 6' auf. Dies ist für die Bildung eines Spaltes ausreichend, so dass das Medium 11 hindurch dringen kann. Wird nun in bekannter Weise das Dichtelement 3 entsprechend DE 19722935 C1 als Konturdichtring ausgebildet, kann das Medium 11 am Dichtelement 3 vorbei nach außen dringen. Eine nichtverpresste Verbindungsstelle würde auf diese Weise angezeigt.

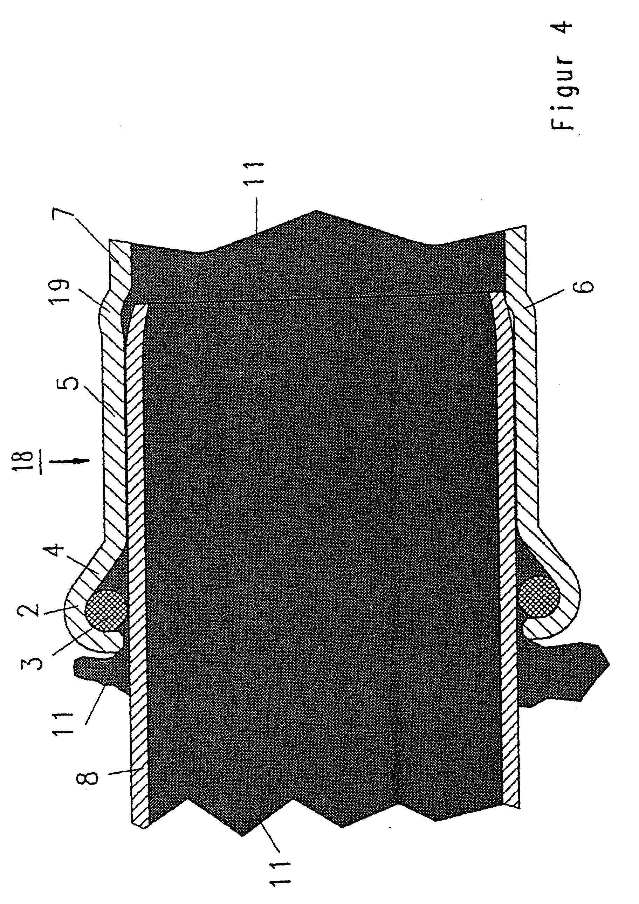

In **Figur 4** ist in einem Längsschnitt eine zweite Ausführungsform der Erfindung dargestellt, wobei für gleiche Teile gleiche Bezugszeichen gewählt worden sind. Zur Bildung einer die durchgehende kegelsitzartige Abdichtung unterbrechenden Öffnung weist der modifizierte Pressfitting 18 im Bereich des Absatzes 6 an mindestens einer Umfangsstelle eine eingedrückte Sicke 19 auf. In dieser Darstellung ist gut zu erkennen, wie durch die eingedrückte Sicke 19 eine Öffnung gebildet wird, so dass das Medium 11 in den Ringspalt zwischen Leitungsrohr 8 und Pressfitting 18 eindringen und vorn austreten kann, falls die Verbindungsstelle nicht verpresst worden sein sollte.

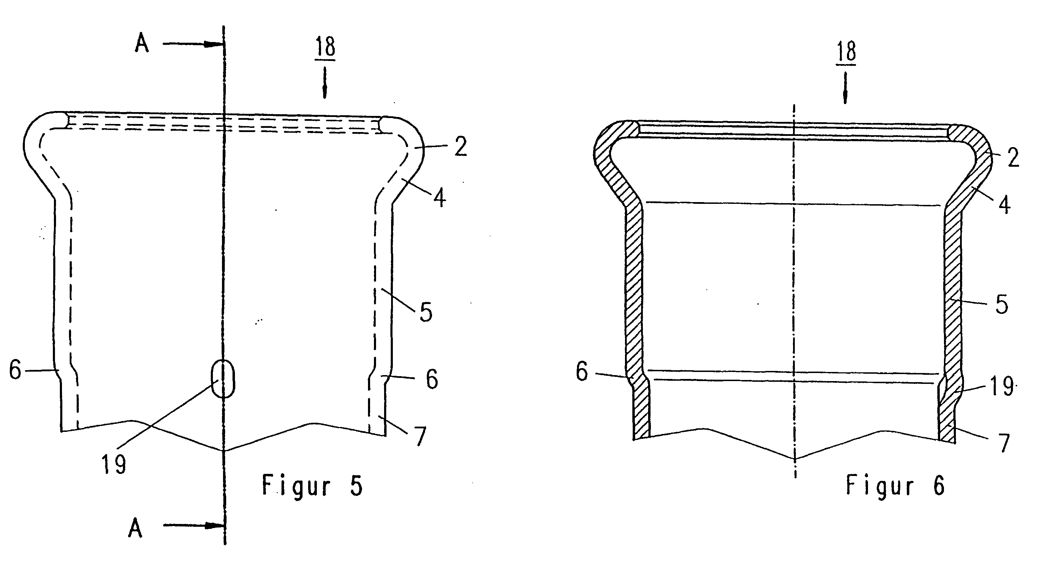

In den **Figuren 5 und 6** ist in einer Draufsicht und in einem Schnitt die Anordnung der Sicke 19 am Pressfitting 18 dargestellt.

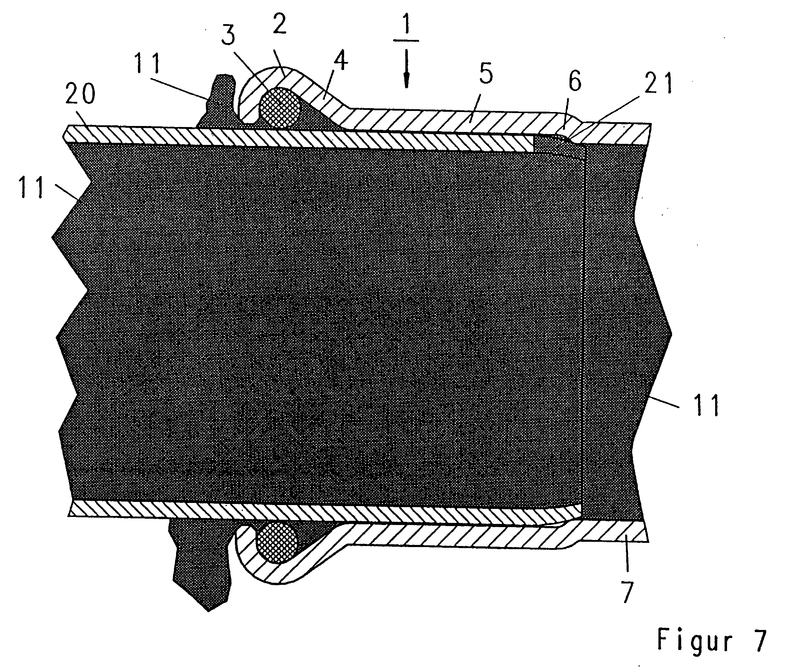

**Figur 7** zeigt in einem Längsschnitt eine dritte Ausführungsform der Erfindung. Bei dieser Ausführungsform ist die Bildung einer Öffnung zur Unterbrechung der durchgehenden kegelsitzartigen Abdichtung in das Leitungsrohr 20 gelegt worden. Die Öffnung wird gebildet durch eine schlitzartige Ausnehmung 21 im Endbereich des Leitungsrohres 20. Durch diese Ausnehmung wird die durchgehende kegelsitzartige Abbdichtung unterbrochen, so dass das Medium 11 in den Ringspalt zwischen Leitungsrohr 20 und Pressfitting 1 eindringen und vorn austreten kann, solange die Verbindungsstelle nicht ordnungsgemäß verpresst ist.

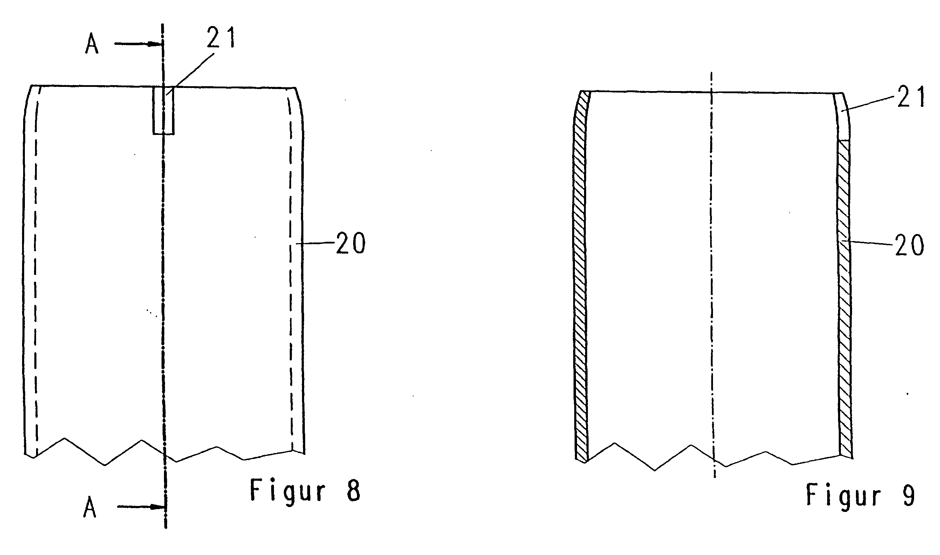

In den **Figuren 8 und 9** ist in einer Draufsicht und in einem Schnitt das modifizierte Leitungsrohr 20 dargestellt.

### Bezugszeichenliste

| Nr. | Bezeichnung |
|---|---|
| 1 | Pressfitting (Stand der Technik) |
| 2 | ringförmige Wulst |
| 3 | Dichtelement |
| 4 | schräger Abschnitt |
| 5 | zylindrisch ausgebildeter Abschnitt |
| 6, 6' | Absatz |
| 7 | zylindrisch ausgebildeter Abschnitt |
| 8 | Leitungsrohr |
| 9 | eingefallener Endbereich |
| 10 | kegelsitzartige Abdichtung |
| 11 | Medium |
| 12 | Pressfitting (Erfindung) |
| 13 | Vertikalebene |
| 14 | Längsachse |
| 15 | Winkellage |
| 16 | kürzester Abstand |
| 17 | Stirnseite |
| 18 | Pressfitting (Erfindung) |
| 19 | Sicke |
| 20 | Leitungsrohr (Erfindung) |
| 21 | schlitzartige Ausnehmung |

## Patentansprüche

1. Rohrpressverbindung, bestehend aus einem Pressfitting (1, 12, 18), der mindestens einen im Querschnitt wulstartig ein Dichtelement aufnehmenden Abschnitt (2) und einen daran anschließenden, der Einschubseite zu- und/oder abgewandten zylindrisch ausgebildeten Abschnitt (5) aufweist, wobei der der Einschubseite abgewandte zylindrisch ausgebildete Abschnitt (5) einen Anschlag (6,6') bildend in einen daran anschließenden zylindrisch ausgebildeten Abschnitt (7) übergeht, dessen Innendurchmesser kleiner ist als die anderen zylindrisch ausgebildeten Abschnitte und einem Leitungsrohr (8, 20) dessen Endbereich nach dem Einschub in den Pressfitting (1, 12, 18) am inneren Anschlag (6, 6') des Pressfittings (1, 12, 18) zur Anlage kommt und mittels eines den Pressfitting (1, 12, 18) umfassenden, mindestens zwei Pressbacken aufweisenden Presswerkzeuges nach dem Schlieβen eine unlösbare, dichte Rohrverbindung gebildet wird, wobei während des Verpressens die Pressbacken sowohl auf die Ringwulst (2) einschließlich des darin eingelegten Dichtelementes (3) als auch auf den der Einschubseite zugewandten und/oder abgewandten zylindrisch ausgebildeten Abschnitt (5) des Pressfittings (1, 12, 18) einwirken
**dadurch gekennzeichnet,**
**dass** im Kontaktbereich zwischen dem inneren Anschlag (6,6') des Pressfittings (1, 12, 18) und dem Endbereich des eingeschobenen Leitungsrohres (8, 20) eine das Eindringen des zu fördernden Mediums (11) in den Ringspalt zwischen Leitungsrohr (8, 20) und Pressfitting (1, 12, 18) erlaubende und die durchgehende kegelsitzartige Abdichtung unterbrechende Öffnung angeordnet ist.

2. Rohrpressverbindung nach Anspruch 1
**dadurch gekennzeichnet,**
**dass** die Öffnung gebildet wird durch eine Winkellage (15) der durch die ringförmige Kontur des inneren Anschlages aufgespannten Vertikalebene (13) zur Längsachse (14) des Pressfittings (12).

3. Rohrpressverbindung nach Anspruch 2
**dadurch gekennzeichnet,**
**dass** die Winkellage (15) größer ist als die mögliche Schiefstellung des Leitungsrohres im eingeschobenen Zustand.

4. Rohrpressverbindung nach Anspruch 2 und 3
**dadurch gekennzeichnet,**
**dass** der kürzeste Abstand (16) zwischen dem Anschlag (6, 6') und der Stirnseite (17) des Pressfittings (1, 12, 18) dem Z-Maß entspricht.

5. Rohrpressverbindung nach Anspruch 1
**dadurch gekennzeichnet,**
**dass** die Öffnung gebildet wird durch mindestens eine am Umfang des inneren Anschlages eingedrückte Sicke (19).

6. Rohrpressverbindung nach Anspruch 1
**dadurch gekennzeichnet,**
**dass** die Öffnung gebildet wird durch eine im Endbereich des eingeschobenen Leitungsrohres (20) angeordneten schlitzartigen Ausnehmung (21).

## Claims

1. Press fitted pipe joint, comprising a press fitting (1, 12, 18) which has at least one section (2) that is bead-shaped in cross-section and accepts a sealing element, and a cylindrical section (5) adjoining it and facing towards and/or away from the insertion side, the cylindrical section (5) that faces away from the insertion side changing, while forming a limit stop (6, 6'), into an adjoining cylindrical section (7), the internal diameter of which is smaller than the other cylindrical sections; and comprising a pipe (8, 20), the end area of which, after insertion into the press fitting (1, 12, 18), comes to rest against the inner limit stop (6, 6') of the press fitting (1, 12, 18), and a non-detachable leakproof pipe joint is formed after the closing process by means of a compression tool that encircles the press fitting (1, 12, 18) and has at least two pressure clamps, the pressure clamps acting, during the compression process, both on the annular bead (2) including the sealing element (3) inserted therein and on the cylindrical section (5) of the press fitting (1, 12, 18) that faces towards and/or away from the insertion side,
**characterised in that**
in the contact area between the inner limit stop (6, 6') of the press fitting (1, 12, 18) and the end area of the inserted pipe (8, 20), there is an opening that permits the medium (11) being carried to penetrate into the annular gap between the pipe (8, 20) and the press fitting (1, 12, 18) and that interrupts the continuous bevel-seat shaped seal.

2. Press fitted pipe joint as in Claim 1,
**characterised in that**
the opening is formed by an angular position (15) of the vertical plane (13) that is gripped by the ring-shaped contour of the inner limit stop in relation to the longitudinal axis (14) of the press fitting (12).

3. Press fitted pipe joint as in Claim 2,
**characterised in that**
the angular position (15) is greater than the possible slanted position of the pipe when inserted.

4. Press fitted pipe joint as in Claim 2 and 3,
**characterised in that**
the shortest distance between the limit stop (6, 6') and the front edge (17) of the press fitting (1, 12, 18) is the same as the dimension Z.

5. Press fitted pipe joint as in Claim 1,
**characterised in that**
the opening is formed by at least one crimp (19) impressed on the circumference of the inner limit stop.

6. Press fitted pipe joint as in Claim 1,
**characterised in that**
the opening is formed by a slot-shaped recess (21) positioned in the end area of the inserted pipe (20).

## Revendications

1. Liaison de tubes par sertissage, comprenant un raccord à sertir (1, 12, 18) qui présente au moins un tronçon (2), dont la section est en forme de bourrelet, recevant un élément d'étanchéité et, consécutif à celui-ci, un tronçon (5) réalisé de manière cylindrique orienté vers et/ou à l'opposé du côté d'insertion, le tronçon (5) réalisé de manière cylindrique orienté à l'opposé du côté d'insertion se transformant, en formant une butée (6, 6'), en un tronçon (7), consécutif à celle-ci, réalisé de manière cylindrique, dont le diamètre intérieur est inférieur à celui des autres tronçons réalisés de manière cylindrique, et comprenant un tube de conduite (8, 20) dont la zone d'extrémité vient en appui après l'insertion dans le raccord à sertir (1, 12, 18) contre la butée intérieure (6, 6') du raccord à sertir (1, 12, 18) et une liaison de tubes étanche inamovible étant formée après la fermeture d'un outil de sertissage présentant au moins deux mâchoires de compression entourant le raccord à sertir (1, 12, 18), les mâchoires de compression agissant pendant le sertissage aussi bien sur le bourrelet annulaire (2), y compris l'élément d'étanchéité (3) posé à l'intérieur, que sur le tronçon (5) du raccord à sertir (1, 12, 18) réalisé de manière cylindrique et orienté vers et/ou à l'opposé du côté d'insertion,
**caractérisée en ce que**, dans la zone de contact entre la butée intérieure (6, 6') du raccord à sertir (1, 12, 18) et la zone d'extrémité du tube de conduite (8, 20) inséré, il est agencé une ouverture permettant la pénétration du fluide à transporter (11) dans l'espace annulaire situé entre le tube de conduite (8, 20) et le raccord à sertir (1, 12, 18) et interrompant l'étanchéité continue de type siège conique.

2. Liaison de tubes par sertissage selon la revendication 1,
**caractérisée en ce que** l'ouverture est formée par une position angulaire (15) du plan vertical (13) tiré à travers le contour annulaire de la butée intérieure par rapport à l'axe longitudinal (14) du raccord à sertir (12).

3. Liaison de tubes par sertissage selon la revendication 2,
**caractérisée en ce que** la position angulaire (15) est supérieure à la position oblique éventuelle du tube de conduite à l'état inséré.

4. Liaison de tubes par sertissage selon les revendications 2 et 3,
**caractérisée en ce que** l'écartement le plus court (16) entre la butée (6, 6') et le côté frontal (17) du raccord à sertir (1, 12, 18) correspond à la cote Z.

5. Liaison de tubes par sertissage selon la revendication 1,
**caractérisée en ce que** l'ouverture est formée par au moins une moulure (19) imprimée à la périphérie de la butée intérieure.

6. Liaison de tubes par sertissage selon la revendication 1,
**caractérisée en ce que** l'ouverture est formée par un évidement (21) en forme de fente agencé dans la zone d'extrémité du tube de conduite (20) inséré.
